# EUROPEAN PATENT SPECIFICATION

(11) **EP 0 377 420 B1**
(45) Date of publication and mention of the grant of the patent: **02.11.1994**
(21) Application number: 89850003.8
(22) Date of filing: 05.01.1989
(51) Int. Cl.: B01D 46/52

(54) **Air filter**
Luftfilter
Filtres à air

(43) Date of publication of application: 11.07.1990
(73) Proprietor: CAMFIL AB, S-150 13 Trosa (SE)
(72) Inventor: Svensson, Anders, S 619 00 Trosa (SE)
(74) Representative: Berglund, Erik Wilhelm

(56) References cited:
- FR-A- 2 490 970
- GB-A- 1 272 564
- US-A- 408 749
- US-A- 3 914 116
- US-A- 4 135 900

## Description

This invention is concerned with air filters used to provide a very clean surrounding at for instance mounting stations for electronic circuits etc. In order to provide a very clean athmosphere at a mounting table a very clean flow of air is directed vertically downwards towards the table. In this way a barrier is obtained preventing dust from the surroundings to reach the work pieces. The great advantage with this arrangement is that not even the person carrying out the work will contribute to the contamination of the work piece. In general these filters are of the so called absolute type, that is they do practically not let any contaminations through at all. These filters are made by a rectangular zigzag folding of a filter sheet with interposed aluminium distance elements, the distance element being zigzag bent aluminium strips*. It is easily apparent that these filters become very expansive, not only from a material point of view but also due to the great amount of work necessary to fabricate them. Attempts have therefore been made to produce these filters without these expensive aluminium distance elements. It has for instance been suggested to use simple filters consisting of only zigzag folded paper elements. Regretfully this has not turned out to be a very good solution.
* (US-A-3 914 116)

Filters produced in this way can cope with the necessary amount of air and they also provide a sufficiently clean air but they do not provide sufficiently clean working conditions when installed above a work bench since dust is drawn into the air stream from the surrounding. The reason for this is that these filters do not give the required even flow of air leaving the filter. Instead they result in a rather turbulent flow which totally destroys the clean surrounding at the work piece. Surrounding dust can easily be trapped in the swirles and swept into the air stream and contaminate the work piece. The more expensive above de scribed absolute filters including aluminium distance elements however give an extremely even flow. The reason for this is that the air is very exactly directed through the filter by the aluminium strips which provide a great number of pipelike parallel passages. The less expansive filters whether they are are of the absolute kind or not do however not have the same precision in the guiding of the air that is streaming through and this lack of precision results in variations of the flow direction over the filter surface.

In view of the above it is the object of the invention to obtain a filter that is less costly to fabricate but that is still useable for appliencies were a very even flow is necessary from the filter for instance at work stations where very great degree of purity must be achieved.

The above object is suprisingly enough achieved by actually increasing the turbulence after the filter. This is done in accordance with claim 1 by placing a fine mesh fabric or other easily air penetratable sheet material with small passages for the air directly after the filter. In this way all part flows leaving the absolute filter itself is broken up into multiple multidirectional small flows, which then after they have passed the fabric compensate each other in a lateral direction whereas the general flow direction is retained and a very even flow is obtained.

In a preferable embodiment of the invention the sheet material is preferably adhered to the filter itself already at fabrication, thereby also increasing the strength of the filter, which faciliates it's mounting in frames etc.

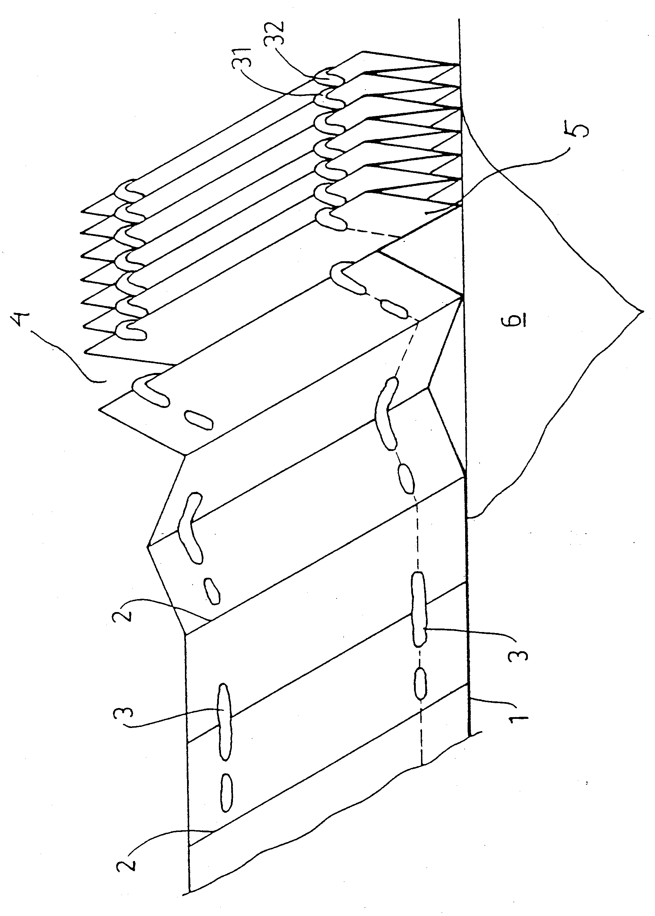

The invention is below to be described in a prefered embodiment shown in the drawing.

In the drawing a filter sheet material is designated by 1. When the filter is fabricated folding lines 2 are pre-formed in the material by compressing the sheet material along parallell lines. At the next station glue is administered to the upper and under side of the filter sheet material. As can be seen the glue is not administrated in one continuous line but in short broken lines 3. The administration of glue 3 is such that when the filter sheet material in a consequtive fabrication step is folded an even wedge like appearance is obtained. This wedge like appearance is obtained by allowing two opposite glue spots 31, 32 or glue lines to come in contact at the open edge 4 of the wedge whereas at the apex of 5 the wedge no glue is administrated and in the vicinity thereof glue is only applied to one of the two opposite surfaces. The glue is administrated in the same manner on the other side the filter material.

In the shown embodiment the filter sheet material is folded while the glue is till at least partially melted so that the glue can adhere to itself glueing the filter together. In this manner the distance between the folds and thus the area of the filter can be governed by the speed with which the folded filter is removed. A fast transportation of the filter results in rather wide wedges whereas a slow transportation makes a more compact filter with a greater surface. It is also possible to allow the glue to harden before the folding and the glue can be remelted at the folding station or not. In fact it need not be glue that is used but also other materials can be deposited on the filter sheet material in order to give this wedge like appearance when the filter is folded.

In this embodiment the use of glue however is of importance since it is used to glue an additional air penetratable sheet material 6 to the under side of the filter. This material is forced up and against the bottom or the lower side of the filter. Since the glue lines pass over the outside of the downwards directed wedges no additional glue has to be administrated to fasten the penetratabel sheet material.

If additional strength is desired an additional air penetratable sheet material can be applied on the upper side of the filter in the same way but this has to be pressed down against the filter by an air cushion or something else. Not only is the filter strength increased in this way but great dust clustres are also prevented from entering the fine structure of the filter and in this way the upper side of the filter can be dusted off keeping the life span of the filter longer.

At later not shown stages in the preparation of the filter it can be cut up in suitable sizes etc.

In the above description one manner of obtaining the wedgelike cross-section of the filter has been described. Of course other paterns for the glue is also possible and of course the additionally applied sheet material can also be applied by a separate glueing station.

## Claims

1. Air filter for the provision of a very clean surrounding at for instance mounting stations for electronic circuits etc. and including a zigzag folded filter sheet forming wedges open alternately towards the inlet and towards the exit side of the filter as filtering material characterized by a fine mesh material or other easily air penetratable sheet material with small passages for the air placed on the exit side of the filter directly after the zigzag folded filter sheet so that all air part flows leaving the zigzag folded filter sheet are broken up into multiple multidirectional small flows, which then compensate each other in a lateral direction whereas the general flow direction is retained and a very even flow is obtained.

2. Filter according to claim 1, characterized in that the fine mesh sheet material is glued to the exit side of the filter.

3. Filter according to claim 2, characterized in that the glue used for fastening the fine mesh air penetratable material to the filter is also used for glueing the filter together.

4. Filter according to any of the previous claims characterized in that fine mesh air penetratable material also cover the entrance side of the filter.

5. Filter according to any of the previous claims characterized in that the zigzag folded filter sheet is held together by glue lines applied on both sides of the zigzag folded sheet.

## Patentansprüche

1. Luftfilter zur Erzeugung einer hochreinen Umgebung, beispielsweise in Bestückungsstationen für elektronische Schaltungen usw., mit einem im Zickzack gefalteten Filterblatt als Filtermaterial,, das Keile bildet, die abwechselnd gegen die Eingangsseite und die Ausgangsseite des Filters geöffnet sind, gekennzeichnet durch ein feinmaschiges Filtermaterial oder ein anderes Blattmaterial, das von Luft leicht durchsetzt wird, feine Durchgängen für Luft aufweist und sich auf der Ausgangsseite des Filters unmittelbar nach dem im Zickzack gefalteten Filterblatt befindet, derart, dass alle Luftteilströme, die aus dem im Zickzack gefalteten Filterblatt austreten, in zahlreiche kleine Einzelströmungen in viele Richtungen zerteilt werden, die sich dann in seitlicher Richtung kompensieren, während die allgemeine Strömungsrichtung beibehalten wird und man eine sehr gleichmässige Strömung erhält.

2. Filter nach Anspruch 1, dadurch gekennzeichnet, dass das feinmaschige Blattmaterial an die Ausgangsseite des Filters verklebt ist.

3. Filter nach Anspruch 2, dadurch gekennzeichnet, dass der zur Befestigung des feinmaschigen luftduchlässigen Materials am Filter verwendete Klebstoff ebenfalls zum Zusammenkleben des Filters verwendet ist.

4. Filter nach einem der vorstehenden Ansprüche, dadurch gekennzeichnet, dass feinmaschiges luftdurchlässiges Material auch die Eingangsseite des Filters bedeckt.

5. Filter nach einem der vorstehenden Ansprüche, dadurch gekennzeichnet, dass das im Zickzack gefaltete Filterblatt von Klebstoffsträngen zusammengehalten wird, die auf beiden Seiten des im Zickzack gefalteten Blattes aufgebracht sind.

## Revendications

1. Filtre à air pour l'établissement d'un environnement à haute pureté, par exemple dans les stations de montage de circuits électroniques etc., comprenant une feuille de filtre pliée en zigzag comme matière filtrante, formant des coins alternativement ouverts vers le côté d'entrée et le côté de sortie du filtre, caractérisé par une matière à mailles fines ou une autre matière en feuille facilement pénétrable à l'air et ayant des petits passages pour l'air, placée au côté de sortie du filtre immédiatement après la feuille de filtre pliée en zigzag, de sorte que tous les courants d'air partiels quittant la feuille de filtre pliée en zigzag sont divisés en petits courants multiples et multidirectionnels se compensant ensuite mutuellement dans une direction latérale tandis que la direction générale du courant est maintenue en obtenant un écoulement très uniforme.

2. Filtre selon la revendication 1, caractérisé en ce que la matière à mailles fines est collée au côté de sortie du filtre.

3. Filtre selon la revendication 2, caractérisé en ce que la colle utilisée pour fixer la matière à mailles fines pénétrable à l'air au filtre est également utilisée pour coller le filtre ensemble.

4. Filtre selon l'une quelconque des revendications précédentes, caractérisé en ce que la matière à mailles fines pénétrable à l'air couvre également le côté d'entrée du filtre.

5. Filtre selon l'une quelconque des revendications précédentes, caractérisé en ce que la feuille de filtre pliée en zigzag est maintenue ensemble par des lignes de colle appliquées aux deux côtés de la feuille pliée en zigzag.
